# FASCICULE DE BREVET EUROPEEN

(11) **EP 0 628 733 B1**
(45) Date de publication et mention de la délivrance du brevet: **06.11.1996**
(21) Numéro de dépôt: 94401264.0
(22) Date de dépôt: 07.06.1994
(51) Int. Cl.: F16B 2/24

(54) **Dispositif de liaison de deux structures en tôle pliée**
Vorrichtung zur Verbindung zweier Metallblechstrukturen
Device to connect two metal sheet structures

(30) Priorité: 08.06.1993 FR 9306848
(43) Date de publication de la demande: 14.12.1994
(73) Titulaire: ATAL, F-75017 Paris (FR)
(72) Inventeur: Prevot, Alain, F-02000 Laon (FR)
(74) Mandataire: Robert, Jean-Pierre

(56) Documents cités:
- AU-B- 629 164
- US-A- 3 858 995

## Description

La présente invention concerne un dispositif de liaison de deux tôles en appui l'une sur l'autre qui peut se monter et se démonter sans outil spécifique (US-A-3 858 995).

L'assemblage de deux tôles est en général effectué par des boulons ou par des vis qui coopèrent avec des écrous portés par l'une des tôles soit des écrous cages soit des écrous à sertir.... ce qui entraîne un temps de montage relativement long et fastidieux avec la mise en oeuvre d'outils variés.

Il existe donc un besoin de réaliser l'assemblage de tôles au moyen d'un organe simple qui peut se monter et se démonter rapidement et sans l'aide d'un ou plusieurs outils spécifiques.

A cet effet l'invention a donc pour objet un dispositif de liaison de deux tôles en appui l'une sur l'autre, l'une des tôles appartenant à une structure comportant, sensiblement perpendiculaire à la surface de contact, un pli qui présente un bord sensiblement parallèle à cette surface et éloigné de celle-ci, les tôles en contact étant percées d'un orifice, ce dispositif comportant une clé d'assemblage présentant une première branche destinée à traverser les orifices pour s'étendre de part et d'autre des deux tôles assemblées et former dans une position active un organe élastique de serrage de ces tôles l'une contre l'autre et une seconde branche pour coopérer avec le bord libre du pli susdit afin d'armer et de maintenir la première branche dans sa position active au travers des orifices.

L'assemblage de deux tôles est ainsi réalisé de manière simple. Il suffit de les rapprocher pour mettre en regard l'un de l'autre les orifices qu'elles comportent, introduire dans ces orifices, et par le côté de l'assemblage qui possède le bord libre perpendiculaire aux surfaces en appui, la branche de la clé d'assemblage, faire pivoter cette branche dans l'orifice de sorte que, de part et d'autre de cet orifice, cette branche appuie sur les deux tôles à assembler et forcer cet appui et le maintenir en encliquetant la seconde branche sur le bord libre du pli de la structure.

D'autres caractéristiques et avantages ressortiront de la description d'un mode de réalisation de l'invention donné ci-après à titre d'exemple.

Il sera fait référence aux dessins annexés parmi lesquels :
- la figure 1 est une vue extérieure en perspective de la clé d'assemblage mise en oeuvre dans le dispositif de liaison de l'invention,
- la figure 2 est une vue de profil de l'une des branches de la pince représentée à la figure 1.
- les figures 3, 4 et 5 illustrent une première mise en oeuvre de la clé d'assemblage selon l'invention,
- les figures 6 et 7 illustrent une seconde mise en oeuvre possible de cette clé d'assemblage.

La clé d'assemblage 1 conforme à l'invention est réalisée à partir d'un feuillard métallique issu d'un matériau-ressort, par pliage. Ce pliage divise la clé en deux branches autour d'un pli principal 2. D'un côté de ce pli une première branche 3 comporte une zone médiane 4 sensiblement perpendiculaire à deux parties d'extrémité 5 et 6. La partie 5 opposée au pli 2 par rapport à la zone médiane 4 est en forme de languette qui revient en surplomb au-dessus de la zone médiane 4. La partie 6 est quant à elle sensiblement perpendiculaire à la partie 4.

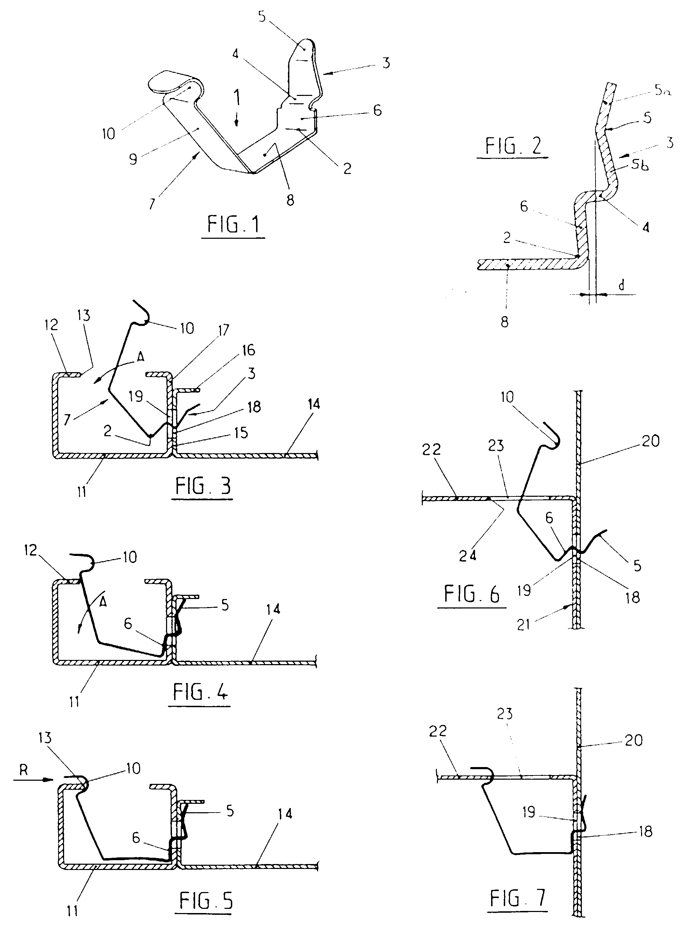

La figure 2 est une vue de profil de cette première branche 3 de la clé 1 sur laquelle on a indiqué par d la distance séparant les deux ailes 5 et 6 de cette branche 3 lorsque celle-ci n'est pas élastiquement déformée. Il faut noter que cette distance d doit pour que la clé fonctionne correctement, être toujours inférieure à la somme des épaisseurs des deux tôles à assembler.

Au-delà du pli 2, la clé comporte une seconde branche 7 dont une partie 8 voisine 2 est sensiblement perpendiculaire à la partie 6 de la branche 3, tandis qu'une seconde partie 9 de cette branche 7 forme un levier incliné sur la partie 8 et élastiquement déformable pour que son extrémité 10 en forme de gouttière puisse être rapprochée ou éloignée de la branche 3.

En outre il faut noter que la largeur de la partie 6 est plus importante que celle des parties 3 et 4, pour les raisons qui seront données ci-après.

Dans le mode de réalisation représenté, la branche 3 est précisément formée de manière que la partie 6 forme un angle de 85° avec la partie 8 de la branche 7, que la partie 4 forme un angle de 90° avec la partie 6. La partie 5 est en forme de V très ouvert dont les branches 5a et 5b forment entre elles un angle de 150°. La branche 5b forme sur la partie 4 un angle de 80°. Le sommet du V constitue la zone de la languette la plus en surplomb au-dessus de la partie 4, au droit de laquelle la distance d est mesurée.

Pour ce qui concerne la branche 7, l'angle entre les parties 8 et 9 est de 118° et l'aile extrême de la gouttière 10 forme un angle de 110° avec la partie 9.

La structure en tôle pliée assemblée conformément à l'invention et illustrée par les figures 3, 4 et 5 comporte une première pièce 11 en forme de caisson dont une paroi est ouverte, ce qui détermine un pli 12 limité par un bord libre 13. La seconde pièce de l'assemblage est constituée par une tôle 14 ayant un pli 15 perpendiculaire à cette tôle 14 et un retour 16 parallèle à cette tôle 14. L'assemblage est réalisé par maintien en contact des pièces 11 et 14 au niveau de leur paroi 15 pour la pièce 14 et 17 pour la pièce 11 adjacente et pourvues d'orifices 18 et 19 en correspondance.

Lorsque l'on aligne les orifices 18 et 19, on peut introduire les parties 4 et 5 de la branche 3 de la clé 1 dans ces orifices et faire basculer cette branche autour de l'épaulement que forme la partie 6 plus large au niveau de sa jonction avec la partie 4 qui bute sur les bords de l'orifice 19. Ceci n'est possible que si la largeur des orifices 18, 19 (au moins celle de l'orifice 19) est comprise entre les largeurs des parties 4 et 6. Lors de ce basculement indiqué A sur les figures 3 et 4, on ramène la branche 7 de la clé dans un sens tel que l'on force la patte 5 à venir s'appuyer derrière le retour 15 de la pièce 14 et la partie 6 de la branche 4 à s'appuyer à l'intérieur de la paroi 17 de la pièce 11. On crée ainsi un effort de pincement des deux parois 15 et 17 entre les parties 5 et 6 de la branche 3 si ces parois 15 et 17 sont, comme cela est le cas, d'épaisseur cumulée supérieure à la distance d indiquée à la figure 2, ce pincement pouvant être maintenu en encliquetant la partie d'extrémité 10 de la branche 7 qui est en forme de gouttière sur le bord libre 13 de la structure 11, comme cela est indiqué à la figure 5.

Le démontage de cet assemblage s'opère extrêmement facilement en repoussant la gouttière 10 à l'intérieur de la structure 11 en direction des parois assemblées comme indiqué par la flèche R de la figure 5 pour la faire échapper du bord 13 et en soulevant ainsi la branche 7 pour l'extraire du caisson 11, ce qui permet alors d'extraire la branche 3 de la clé des orifices 18 et 19.

Aux figures 6 et 7, l'une des structure est une tôle simple 20 alors que la seconde est une tôle pliée 21 dans un des panneaux 22 de laquelle on a réalisé une ouverture 23 pour pouvoir y glisser la clé d'assemblage 1, de la même manière que celle expliquée en regard des figures 3 à 5. C'est le bord 24 de l'ouverture 23, éloigné des parois adjacentes à assembler, qui constitue l'endroit qui sera chevauché par la partie en gouttière 10 de la clé 1. On retrouve sur ces figures 6 et 7 certains des éléments déjà décrits en regard des figures précédentes avec les mêmes références. La mise en place et l'extraction de la clé 1 s'opèrent de la même manière qu'en regard des figures 3 à 5.

L'invention permet donc de réaliser des assemblages au moins temporaires et même définitifs de deux tôles par exemple dans le domaine de la construction de mobilier métallique, de manière simple et extrêmement rapide. L'expérience montre qu'on divise en effet le temps de montage par 3 à 5 avec le dispositif selon l'invention relativement aux dispositifs antérieurs. En outre, la clé d'assemblage permet d'accommoder des tôles d'épaisseurs différentes dans les limites de la déformation élastique de la patte 5 depuis sa position représentée à la figure 2 jusqu'à une position où elle est pratiquement perpendiculaire à la partie médiane 4 de la branche 3.

On indiquera enfin que l'invention s'applique à d'autres configurations d'assemblage que celles décrites ci-dessus. En particulier elle concerne également une variante dérivée des figures 5 et 7 dans laquelle la tôle 20 est placée sur la face interne du panneau 21.

## Revendications

1. Assemblage de deux tôles (15, 17) en appui l'une contre l'autre dont l'une appartient à une structure comportant, sensiblement perpendiculaire à la surface de contact, un pli (12) qui présente un bord (13) sensiblement parallèle à cette surface et éloigné de celle-ci, caractérisé en ce que les tôles en contact sont percées d'un orifice (18, 19) et en ce qu'il comporte une clé d'assemblage (1) présentant une première branche (3) destinée à traverser les orifices (18, 19) pour s'étendre de part et d'autre des deux tôles assemblées (15, 17) et former dans une position active, un organe élastique de serrage de ces tôles l'une contre l'autre et une seconde branche (7) pour coopérer avec le bord libre (13) du pli (12) susdit afin d'assurer et de maintenir la première branche (3) dans sa position active au travers des orifices (18, 19).

2. Assemblage selon la revendication 1, caractérisé en ce que la première branche (3) de la clé comporte de part et d'autre d'une partie médiane (4) et sensiblement perpendiculaire à celle-ci, deux parties d'extrémité (5, 6) qui sont distantes l'une de l'autre, vues de profil, d'une valeur (d) inférieure à la somme de l'épaisseur de chaque tôle que la clé (1) est destinée à assembler.

3. Assemblage selon la revendication 2, caractérisé en ce que la largeur de la partie d'extrémité (6) de la branche (3) voisine de la seconde branche (7) est supérieure à la largeur d'au moins l'orifice (19) elle-même supérieure à la largeur des autres parties (4,5) de cette première branche (3).

4. Assemblage selon l'une des revendications 1 à 3, caractérisé en ce que la seconde branche (7) de la clé constitue une jambe d'arc-boutement élastiquement déformée entre la tôle (17) et le pli (12) appartenant à la même structure (11).

5. Assemblage selon la revendication 4, caractérisé en ce que la seconde branche (7) comporte une partie d'extrémité (10) en forme de gouttière pour son encliquetage par chevauchement sur le bord (13) du pli (12) susdit.

6. Assemblage selon l'une quelconque des revendications précédentes, caractérisé en ce que la clé (1) est réalisée à partir d'un feuillard plié en matière métallique élastique.

## Patentansprüche

1. Verbindung zweier aneinander anliegender Bleche (15, 17), deren eines zu einer Struktur gehört, umfassend einen im wesentlichen senkrecht zur Berührungsfläche gerichteten Falz (12), der einen im wesentlichen parallel zu dieser Fläche gerichteten und von dieser beabstandeten Rand (13) hat, dadurch **gekennzeichnet**, daß die einander berührenden Bleche eine Durchbrechung (18, 19) haben, und daß sie einen Verbindungsbügel (1) hat, umfassend einen ersten Schenkel (3), der zum Durchtritt durch die Öffnungen (18, 19) bestimmt ist, so daß er sich beiderseits der beiden zusammengefügten Bleche (15, 17) erstreckt und in einer aktiven Position ein elastisches Spannelement zum Gegeneinanderspannen der Bleche bildet, und einen zweiten Schenkel (7), der mit dem freien Rand (13) des oben genannten Falzes (12) zusammenwirkt, um den ersten Schenkel (3) in seiner aktiven Position zu halten und festzulegen, in der er die Öffnungen (18, 19) durchsetzt.

2. Verbindung nach Anspruch 1, dadurch **gekennzeichnet**, daß der erste Schenkel (3) des Bügels beiderseits eines Mittelabschnittes (4) und im wesentlichen senkrecht zu diesem zwei Endabschnitte (5, 6) hat, die - im Profil betrachtet - einen Abstand voneinander haben, dessen Wert (d) kleiner als die Summe der Dicke der Bleche ist, die der Bügel (1) verbinden soll.

3. Verbindung nach Anspruch 2, dadurch **gekennzeichnet**, daß die Breite des dem zweiten Schenkel (7) benachbarten Endabschnittes (6) des Schenkels (3) größer als die Breite mindestens der Öffnung (19) ist, die ihrerseits größer als die Breite der anderen Abschnitte (4, 5) dieses ersten Schenkels (3) ist.

4. Verbindung nach einem der Ansprüche 1 bis 3, dadurch **gekennzeichnet**, daß der zweite Schenkel (7) des Bügels ein elastisch verformtes Spreizelement zwischen dem Blech (17) und dem zur selben Struktur (11) gehörenden Falz (12) bildet.

5. Verbindung nach Anspruch 4, dadurch **gekennzeichnet**, daß der zweite Schenkel (7) einen rinnenförmigen Endabschnitt (10) hat, mit dem er an dem Rand (13) des genannten Falzes (12) den Rand (13) umgreifend einrastbar ist.

6. Verbindung nach einem der vorhergehenden Ansprüche, dadurch **gekennzeichnet**, daß der Bügel (1) aus einem elastischen Metallband gebogen ist.

## Claims

1. Assembly of two metal sheets (15, 17) bearing against one another, one of which belongs to a structure comprising, substantially perpendicular to the contact surface, a fold (12) which has an edge (13) substantially parallel to said surface and remote from the latter, characterised in that the metal sheets in contact are pierced by an opening (18, 19) and in that said assembly comprises an assembly key (1) having a first branch (3) intended to pass through the openings (18, 19) so as to extend from one side to the other of the two assembled metal sheets (15, 17) and to form, in an active position, a resilient element locking said metal sheets against one another, and a second branch (7) to interact with the free edge (13) of the abovementioned fold (12) in order to secure and to hold the first branch (3) in its active position through the openings (18, 19).

2. Assembly according to Claim 1, characterised in that the first branch (3) of the key comprises, on either side of a mid section (4) and substantially perpendicular to the latter, two end sections (5, 6) which, viewed from the side, are remote from one another by a value (d) which is less than the sum of the thickness of each metal sheet which the key (1) is intended to assemble.

3. Assembly according to Claim 2, characterised in that the width of the end section (6) of the branch (3) adjacent to the second branch (7) is greater than the width of at least opening (19), which, in turn, is more than the width of the other sections (4, 5) of said first branch (3).

4. Assembly according to one of Claims 1 to 3, characterised in that the second branch (7) of the key forms a bracing leg elastically deformed between the metal sheet (17) and the fold (12) belonging to the same structure (11).

5. Assembly according to Claim 4, characterised in that the second branch (7) has an end section (10) in the shape of a gutter for latching thereof by straddling the edge (13) of the abovementioned fold (12).

6. Assembly according to any one of the preceding claims, characterised in that the key (1) is produced from a folded strip of resilient metallic material.
